Europäisches Patentamt

(19) European Patent Office

Office européen des brevets

(11) Publication number : **0 279 533 B1**

# EUROPEAN PATENT SPECIFICATION

(45) Date of publication of patent specification :
**11.03.92 Bulletin 92/11**

(51) Int. Cl.⁵ : **B60B 21/12**, B60C 17/06

(21) Application number : **88300681.9**

(22) Date of filing : **27.01.88**

(54) **A vehicle wheel.**

(30) Priority : **16.02.87 DE 3704830**

(43) Date of publication of application :
**24.08.88 Bulletin 88/34**

(45) Publication of the grant of the patent :
**11.03.92 Bulletin 92/11**

(84) Designated Contracting States :
**DE FR GB IT**

(56) References cited :
**DE-A- 1 755 180
DE-A- 2 509 728
DE-A- 2 712 242
US-A- 3 638 701**

(73) Proprietor : **SP REIFENWERKE GMBH
Dunlopstrasse 2
W-6450 Hanau 1 (DE)**

(72) Inventor : **Gebert, Karl
Tulpenstrasse 28
W-6450 Hanau 8 (DE)**
Inventor : **Miska, Klaus
Feldstrasse 30
W-6451 Hammesbach (DE)**
Inventor : **Ott, Ernst
Dachsweg 8
W-6450 Hanau 9 (DE)**

(74) Representative : **Stewart, Charles Geoffrey
SP TYRES UK LIMITED Tyre Technical
Division
Fort Dunlop Birmingham B24 9QT (GB)**

EP 0 279 533 B1

Jouve, 18, rue Saint-Denis, 75001 PARIS

## Description

The invention relates to a vehicle wheel comprising a multi-part rim having bead seats and lateral rim flanges, a tubeless pneumatic tyre, in particular a radial tyre and also an emergency running system which is arranged on the trim between and in contact with the tyre beads.

One prior art vehicle wheel, corresponding to the preamble of claim 1, is known from DE-C-28 51 187. The emergency running ring for this known vehicle wheel consists of rubber or other elastomeric material, is of one piece construction and sits with its foot part, which fully fills out the space between the tyre beads, on a flat base rim with an inclined shoulder. In the event of pressure loss occurring in the tyre the emergency running ring takes on a supporting function on the one hand and prevents, on the other hand, the tyre beads from moving off the bead seats, and the vehicle thereby loosing its directional stability and steerability.

Vehicle wheels with metallic emergency running rings are also known, wherein the emergency running rings consist of several segments and are pressed against the base of the rim, with the segments being clamped relative to one another.

It is also known to integrate lubricant reservoirs into the emergency running rings, with the reservoirs being opened in the emergency running situation and releasing the lubricant.

A disadvantage of the above is the difficulty of installing the emergency running ring.

The object underlying the present invention is thus to provide a vehicle wheel of the initially named kind which the special feature that the installation is made substantially easier with a simultaneous minimisation of weight, and above all to provide troublefree torque transmission between the rim and the emergency running ring.

Accordingly, the present invention provides an emergency running system formed by two separate rings consisting at least in part of elastomeric material and clamping and spreading segments which engage in form-fitted manner between the support rings, and which can be braced by means of securing elements against the base of the rim and the rim flanges to provide a form-fitted, force transmitting assembly between the support rings, tyre beads and rim.

By splitting up the emergency running system into two support rings and a clamping and spreading ring, which itself is preferably assembled from three segments, the installation is, on the one hand, made decisively easier and can be carried out by means of the customary tools which are carried on board the vehicle. On the other hand, a compact assembly is provided between the rim, the tyre beads and the emergency running system by means of the clamping and spreading segments which are anchored to the rim has by means of securing elements. This compact assembly does not become inoperable due to extreme loading in emergency running operation, nor due to external violence, such as for example if the tyre and wheel assembly is shot at and thus ensures the manoevrability of heavy and extremely heavy vehicles, so that they can maintain adequate speed over relatively large distances even under the most unfavourable circumstances.

Furthermore action of the spreading segments and the resulting compression of the support rings leads to an advantageous compensation for any variations in the tyre dimensions in the bead region, which is advantageous having regard to the use of the emergency running system with tyres from different manufacturers.

In order to achieve volume compensation during axial compression peripherally extending channels which preferably face the tyre beads may be formed in the support rings.

The support rings preferably have a soft elastic sealing layer which is optionally vulcanised into place at the bead contacting side and/or in the wheel seating region with the sealing layer extending inwardly at the wheel rim contacting region in the form of a sealing lip, so that in the assembled state the sealing lips, of the two support rings overlap each other, and troublefree sealing of the tyre interior is obtained having regard to the multi-part rim by the compressive action of the clamping and spreading segments.

In accordance with a further advantageous aspect a seal at the rim base is formed by means of a sealing band which extends over the entire width of the rim and engages beneath the tyre beads. Sealing strips are however preferably directly formed on the support rings, and indeed in such a way that, on the one hand, they engage beneath the respectively associated bead and, on the other hand, so that the sealing strips overlap in the central region.

It is always important with this arrangement that the clamping and spreading segments are clamped without the intermediary of resilient layers, but rather directly against the respective wheel rim surface for which purpose corresponding support projections can be provided.

For the purpose of obtaining a large area for the form-fitted coupling regions between the clamping and spreading segments and the wheel rim surface this coupling is preferably effected via interengaging projections and recesses. In many cases however the required ability to transmit high torques is already achieved simply in that each clamping and spreading segments is clamped against the rim by means of at least two securing screws, which penetrate the rim base and engage in threaded bores of the associated clamping and spreading segments.

In accordance with yet another aspect of the invention the outer peripheral surface of the clamping and spreading segments, which form a composite ring in the installed state, is provided with a gripping profile, so that when the tread is a torn away and the terrain is difficult the drive power which is available can still be used as effectively as possible.

The outer diameter of the support rings is preferably selected to be larger than the outer diameter of the inner ring formed by the clamping and spreading segments, which is preferably of metal, so that in the emergency running situation the tread is initially supported on the support rings. After deflated running and loss of the tread, which may take place after a relatively short time, the support rings themselves are directly effective, and indeed with a certain residual elasticity. The rigid inner ring which is in practice assembled only from the segments takes on the sole supporting function after corresponding wear of the rubber support rings.

Further particularly advantageous embodiments of the invention are described in the subordinate claims.

An embodiment of the invention will now be described by way of example only in more detail with reference to the drawings in which:-

Fig.1 is a schematic partial cross-sectional view of a vehicle wheel in accordance with the invention

Figs.2 to 4 are schematic representations to explain the installation of the emergency running ring for the vehicle wheel of Fig. 1

Fig.5 is a schematic partial cross=sectional view to explain the wedging and clamping principle of the emergency running ring, and

Fig.6 is a schematic representation similar to the vehicle wheel if Fig. 1, with additional sealing strips beneath the tyre beads.

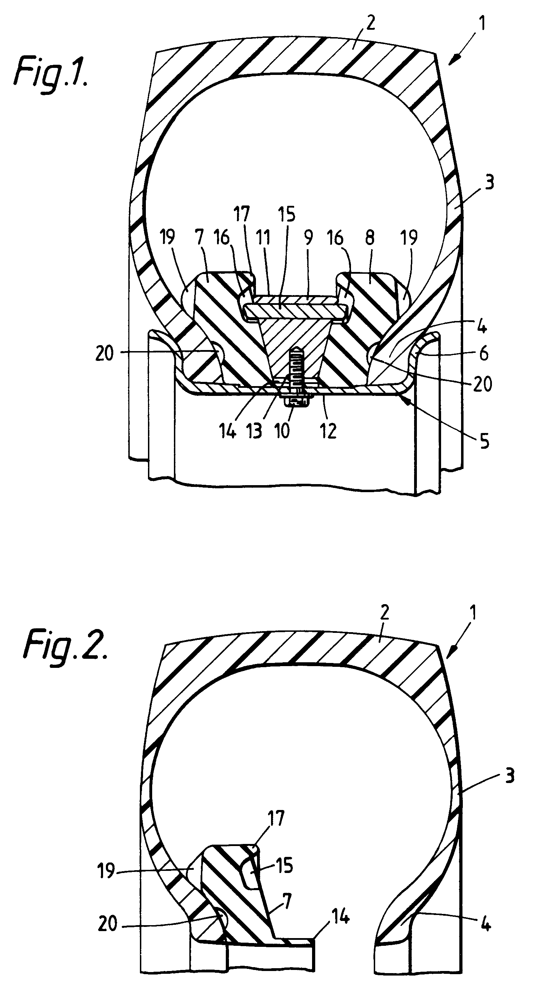

Fig.1 shows a tubeless pneumatic tyre 1 which is in this example a radial tyre having a tread 2, sidewalls 3 and beads 4.

The tyre 1 is mounted on a rim 5, which is a multi-part rim having the customary bead seats and lateral rim flanges 6. A wheel rim consisting of three segments is preferably used as the multi-part rim, however, in principle other desired multi-part rims can also be used, for example rims in which a rim flange or rim horn is formed as a separate part and is attached by screw means.

An emergency running ring is mounted inside the pneumatic tyre 1 and consists of two rubber support rings 7, 8 and a wedge ring formed from metal clamping and spreading segments 9 attached centrally between the two support rings 7, 8.

The clamping and spreading segments 9 are clamped against the rim 5 by means of securing screws 10 which engage through the rim base and engage threaded bores 13 in the clamping and spreading segments 9. This clamping and spreading segment 9 engage directly and in force-transmitting manner with the base of the rim.

The clamping and spreading segments 9 have a wedge-shape in cross-section to press the support rings 7, 8 which consist of elastomeric rubber material, and optionally have internal reinforcement with a high contact force against the tyre beads 4 when the clamping and spreading segments are clamped against the rim 5 by means of the securing screws 10.

This clamping together of the rim 5, beads 4, support rings 7,8 and the clamping and spreading segments 9 provides, in conjunction with the securing screws 10 which bring a direct force transmitting connection between the rim 5 and the clamping and spreading segments 9, a compact assembly which on the one hand can withstand all the loads which occur in emergency running situations, and also all external effects, to ensure an undisturbed torque transmission between the rim and emergency running system in all situations.

The support rings 7, 8 are preferably provided with a soft elastic surface layer in the bead contacting region and the wheel rim base contacting region. This layer may for example be vulcanised into place, and advantageously contributes to the sealing of the pneumatic tyre and wheel assembly to allow use of a tubeless tyre.

A sealing lip 14 expediently extends axially inwardly from each support ring 7, 8, with two sealing lips of the support rings 7, 8 overlapping each other and being pressed against the base of the rim by the clamping and spreading segments so that the required seal is ensured, even for rims which are built up from segments.

Attention should be paid to the fact that the section is so selected in Fig. 1 that the direct bracing of the clamping and spreading segments 9 against the rim base, which can for example take place via webs or ribs, cannot be seen.

One of the securing screws 10 is preferably simultaneously constructed and used as the valve for supplying inflation air to the tyre.

In the radially outer region the clamping and spreading segments have centering projections 15 at both sides, which can also be realised by a throughgoing element which projects at both sides.

These centering projections 15 engage in guide grooves 16 which are formed in the support rings 7, 8 or vice versa.

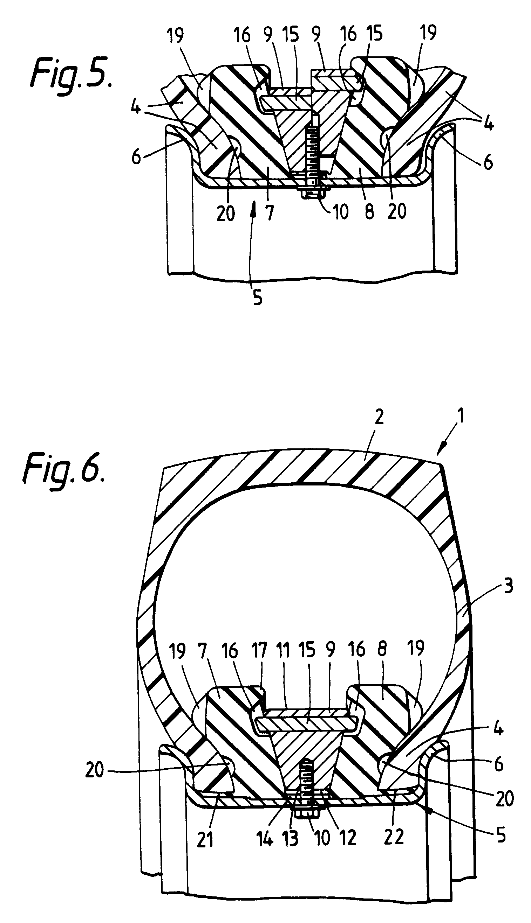

The support rings 7, 8 are furthermore each provided with a peripheral retaining projection 17 for the clamping and spreading segments 9. (See Figs 2 & 6)

In addition to the already described advantages of the compact assembly which is achieved between the emergency running ring, the pneumatic tyre and the rim on the one hand, and the possibility for disturbance-free transmission of higher torques which is present on the other hand, the vehicle wheel of the invention is above all characterised by its simple installation. Whereas known vehicle wheels of this kind which are equipped with emergency running rings require tyre installation presses and often also special tools, the vehicle wheel of the invention with emergency running ring can be installed without special presses and the like solely using tools available on board the vehicle. Thus so-called field installation is also possible.

This installation which is simple to carry out, is explained with reference to Figs. 2 to 4.

Fig. 2 shows the pneumatic tyre 1 into which the first support ring 7 has already been introduced. By splitting the emergency running system up into several components each support ring which is primarily rubber is comparatively simple to deform on its own and can thus be easily brought into an oval shape and introduced into the interior chamber of the tyre, optionally using a spreader for the tyre beads.

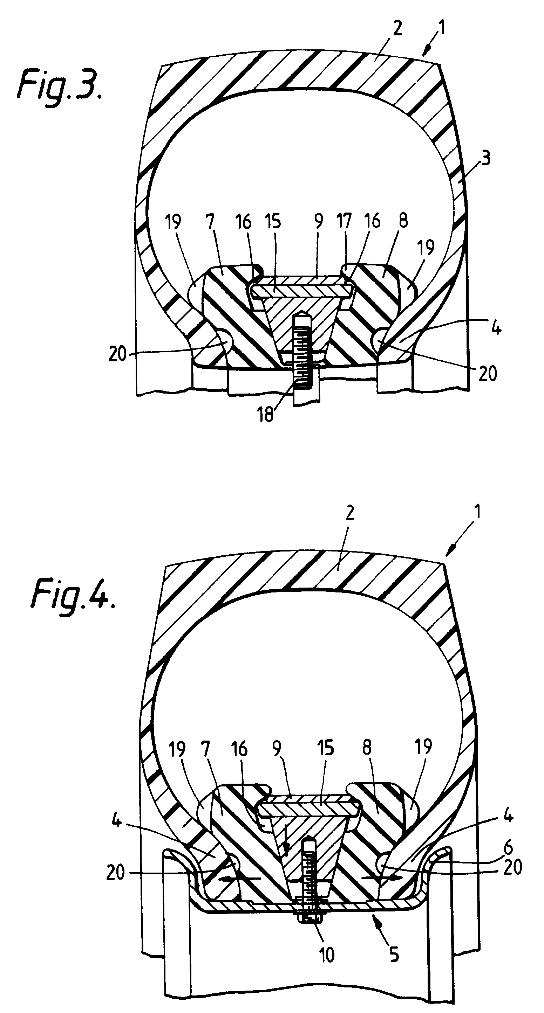

Fig.3 shows the support rings 7, 8 and the clamping and spreading segments 9 inserted into the tyre 2. After the introduction of the support rings 7 and 8 the tyre beads 4 are spread apart with the aid of a spreader so that sufficient space is available for the insertion and alignment of the spreading segments 9. In this phase of the installation alignment of the clamping and spreading segments 9 relative to the support rings 7, 8 already occurs in that the centering projections 15 are disposed in the guide grooves 16 of the support rings 7, 8 so it is no longer possible for the segments 9 to fall back because of the retaining projections 17. This initial position makes later clamping possible. The installation of the multi-part rim can then take place.

Fig.4 shows the state of the vehicle wheel after the removal of the holding bolts 18 and the installation of the multi-part rim 5, and also the screwing together of the latter with the clamping and spreading segments 9.

It can be seen that in this phase of the installation the individual components still form a relatively loose assembly and the beads 4 do not yet firmly contact the rim flanges 6.

Thus startings from the initial position shown in Fig. 4, the securing screws are tightened, and a pronounced axial spreading occurs, as a result of the wedge action between the clamping and spreading segments 9 and the support rings 7, 8. This leads, with simultaneous centering, to forces pressing the tyre beads 4 against the rim and against the rim flanges 6, and to a force transmitting connection being obtained between the rim 5 and the clamping and spreading segments.

Comparatively small forces are required for the tightening of the clamping screws 10 and very high contact pressure forces can be obtained in the axial direction, as a result of the mechanical advantage or transmission ratio resulting from the wedge surfaces.

During the clamping procedure stiffening ribs 19 which are provided above the rim flange region on the support rings 7, 8 at the tyre wall side are directly pressed against the inner wall of the tyre in the transition region from the bead to the sidewall. This results in an important stabilisation of the emergency running system in the radially outer region, which is very advantageous in the emergency running case.

Channels 20 which are formed in the support rings 7, 8 facing the beads 4, and which preferably extend circumferentially, allow favourable volume compensation to be achieved during axial clamping.

After the clamping and tightening process has been completed the emergency running ring adopts the position shown in Fig. 1.

Fig.5. shows once again in schematic manner the process of axial clamping by means of the securing screws 10 which extend in the radial direction, with the right hand side of this representation showing the loose assembly between the clamping and spreading segments 9, the support ring 8, the bead 4 and the rim flange 6, whereas the final tensioned compact assembly of these elements is shown in the left hand part.

The representation of Fig.6 shows an arrangement corresponding to the previously described embodiment, however, a particularly advantageous seal is provided at the rim base.

This seal at the rim base is achieved by means of a continuous one-piece band which preferably extends over the entire rim width. However, sealing strips 21, 22 are preferably moulded onto the support rings 7, 8 and extend beneath the tyre beads 4 up to the rim flanges 6. Sealing strips 14 are likewise moulded onto the support rings 7, 8 and point towards the centre of the rim, with these sealing strips overlapping each other and being disposed between the rim base and the clamping and spreading segments 9.

The above described drawings also make it clear that the vehicle wheel of the invention still retains its running stability, even when the tread is torn away, so that the vehicle can still travel under control over a large distance. During this the emergency running ring acts as a type of solid rubber tyre, which can however transmit a particularly high torque as a result of the compact assembly and the fore transmitting connection with the rim.

## Claims

1. A vehicle wheel comprising a multi-part rim (5) having bead seats and lateral rim flanges (6), a tubeless pneumatic tyre (1), in particular a radical tyre, and also an emergency running system which is arranged on the rim between and in contact with the tyre beads (4) characterised in that the emergency running system is formed by two separate support rings (7,8) consisting at least in part of elastomeric material and by clamping and spreading segments (9) which engage in form-fitting manner between these support rings (7,8) and are braced by means of securing elements (10) against the base of the rim and the rim flanges (6) to provide a form-fitted, interengaging force transmitting assembly between the support rings (7,8), tyre beads (4) and rim (5).

2. A vehicle wheel in accordance with claim 1, characterised in that the inclination of the side surface of the annular disk-like support rings (7,8) facing the clamping and spreading segments (9) is substantially the same, at least in the region between the base of the rim and the level of the rim flanges, as the inclination of the outer surface of the clamping and spreading segments (9) which taper towards the base of the rim.

3. A vehicle wheel in accordance with claim 1 or claim 2, characterised in that the height of the emergency running system related to the base of the rim is approximately twice as large as the respective height of the rim flanges.

4. A vehicle wheel in accordance with claim 2, characterised in that the inclination of the side surface of the support rings (7,8) associated with the clamping and spreading segments (9) relative to the central radial plane amounts to 10 to 20 degrees, and in particular to approximately 15 degrees.

5. A vehicle wheel in accordance with one of the preceding claims, characterised in that the support rings (7,8) have a soft elastic sealing layer at the bead sides and/or at the rim base side.

6. A vehicle wheel in accordance with claim 5, characterised in that the sealing layer at the rim base side is extended in the form of a sealing lip (14) in each case up to the oppositely disposed support ring; and in that the sealing lips (14) of the two support rings (7,8) overlap each other.

7. A vehicle wheel in accordance with claim 5, characterised in that a sealing band which extends over the full rim width and which engages beneath the tyre beads (4) is provided for the seal at the rim base.

8. A vehicle wheel in accordance with one of the preceding claims, characterised in that sealing strips (21,22) which extends underneath the associated tyre beads (4) are formed on the support rings (7,8) for the seal at the rim base.

9. A vehicle wheel in accordance with one of the preceding claims, characterised in that the axial thickness of the support rings (7,8) which are preferably provided with cord and/or steel reinforcements, and of the clamping and spreading segments (9) respectively amount to approximately 1/3 of the mutual spacing of the beads (4) located on the beads seats.

10. A vehicle wheel in accordance with one or more of the preceding claims, characterised in that the clamping and spreading segments (9) which in the assembled state form a composite ring preferably have a smaller outer diameter than the support rings (7,8).

11. A vehicle wheel in accordance with any one of the preceding claims, characterised in that each clamping and spreading segment (9) has the shape of a truncated wedge; and in that the inner surface (12) associated with the truncated end is directly clamped in the assembled state against the base of the rim.

12. A vehicle wheel in accordance with any one or one of the preceding claims, characterised in that the outer peripheral surface (11) of the clamping and spreading segments (9) is provided with a gripping profile.

13. A vehicle wheel in accordance with any one or more of the preceding claims, characterised in that the inner surface (12) of the clamping and spreading segments (9) can be coupled with the base of the rim via interengaging projections and recesses.

14. A vehicle wheel in accordance with one of the preceding claims, characterised in that each clamping and spreading segment (9) is clamped against the rim (5) via at least one securing screw (10) which passes through the base of the rim and engages in a threaded bore (13) of the clamping and spreading segment (9).

15. A vehicle wheel in accordance with one of the preceding claims, characterised in that a securing screw (10) is simultaneously constructed as a valve for the supply of air to the tyre.

16. A vehicle wheel in accordance with one or more of the preceding claims, characterised in that lateral centering projections (15) are provided between the clamping and spreading segments (9) and the side surfaces of the support rings (7,8) which cooperate therewith on one of the two parts in the radially outer region, with the centering projections being intended to engage in guide groove (16) formed in the other respective part.

17. A vehicle wheel in accordance with any of the preceding claims, characterised in that the support rings (7,8) are provided with segments retaining projections (17) at the side facing the clamping and spreading segments (9) in the region of the outer periphery.

18. A vehicle wheel in accordance with one or more of the preceding claims, characterised in that the support rings (7,8) are provided with stiffness ribs (19) at the tyre wall side which in the assembled state come into contact with the inner wall of the tyre above the tyre beads (4).

**Patentansprüche**

1. Fahrzeugrad, das enthält eine mehrteilige Felge (5) mit Wulstsitzen und seitlichen Felgenhörner (6), einen schlauchlosen Luftreifen (1), insbesondere einen Radialreifen, und dazu ein Notlaufsystem, welches an der Felge zwischen den Reifenwulsten (4) und in Berührung mit diesen angeordnet ist, dadurch gekennzeichnet, daß das Notlaufsystem gebildet ist durch zwei separate Stützringe (7, 8), die mindestens teilweise aus elastomerem Material bestehen, und durch Klemm- und Spreizsegmente (9), die zwischen diesen Stützringen (7, 8) in formschlüssiger Weise in Eingriff und mittels Befestigungselementen (10) gegen den Felgengrund und die Felgenhörner (6) gespannt sind, um eine formschlüssig kraftübertragende Eingriffsanordnung zwischen den Stützringen (7, 8), den Reifenwulsten (4) und der Felge (5) zu schaffen.

2. Fahrzeugrad nach Anspruch 1, dadurch gekennzeichnet, daß die Neigung der den Klemm- und Spreiz-Segmenten (9) zugewendeten Seitenfläche der ringförmigen scheibenartigen Stützringe (7, 8) zumindest in dem Bereich zwischen dem Felgengrund und der Höhe der Felgenhörner im wesentlichen gleich ist der Neigung der sich zum Felgengrund hin verjüngenden Außenfläche der Klemm- und Spreiz-Segmente (9).

3. Fahrzeugrad nach Anspruch 1 oder 2, dadurch gekennzeichnet, daß die auf den Felgengrund bezogene Höhe des Notlaufsystems annähernd zweimal so groß wie die jeweilige Höhe der Felgenhörner ist.

4. Fahrzeugrad nach Anspruch 2, dadurch gekennzeichnet, daß die Neigung der den Klemm- und Spreiz-Segmenten (9) zugeordneten Seitenfläche der Stützringe (7, 8) relativ zur zentralen Radialebene sich auf 10 bis 20° und insbesondere auf annähernd 15° beläuft.

5. Fahrzeugrad nach einem der vorangehenden Ansprüche, dadurch gekennzeichnet, daß die Stützringe (7, 8) eine weichelastische Dichtschicht an den Wulstseiten und/oder an der Felgengrundseite besitzen.

6. Fahrzeugrad nach Anspruch 5, dadurch gekennzeichnet, daß die Dichtschicht an der Felgengrundseite in der Form einer Dichtlippe (14) in jedem Fall bis zu dem gegenüberliegend angeordneten Stützring verlängert ist; und daß die Dichtlippen (14) der beiden Stützringe (7, 8) einander überdecken.

7. Fahrzeugrad nach Anspruch 5, dadurch gekennzeichnet, daß für die Abdichtung ein sich über die volle Felgenbreite erstreckendes und unter den Reifenwulsten (4) an dem Felgengrund anliegendes Dichtband vorgesehen ist.

8. Fahrzeugrad nach einem der vorangehenden Ansprüche, dadurch gekennzeichnet, daß an den Stützringen (7, 8) sich unterhalb der zugehörigen Reifenwulste (4) erstreckende Dichtstreifen (21, 22) zur Abdichtung an dem Felgengrund ausgebildet sind.

9. Fahrzeugrad nach einem der vorangehenden Ansprüche, dadurch gekennzeichnet, daß die axiale Dicke der vorzugsweise mit Kord- und/oder Stahl-Verstärkungen versehenen Stützringe (7, 8) und der Klemm- und Spreiz-Segmente (9) jeweils annähernd ein Drittel des gegenseitigen Abstands der an den Wulstsitzen angeordneten Wulste (4) betragen.

10. Fahrzeugrad nach einem oder mehreren der vorangehenden Ansprüche, dadurch gekennzeichnet, daß die im zusammengebauten Zustand einen zusammengesetzten Ring bildenden Klemm- und Spreiz-Segmente (9) vorzugsweise einen kleineren Außendurchmesser als die Stützringe (7, 8) besitzen.

11. Fahrzeugrad nach einem der vorangehenden Ansprüche, dadurch gekennzeichnet, daß jedes Klemm- und Spreiz-Segment (9) die Form eines abgestumpften Keils besitzt; und daß die zu dem stumpfen Ende gehörende Innenfläche (12) im zusammengebauten Zustand direkt gegen den Felgengrund angedrückt ist.

12. Fahrzeugrad nach irgendeinem oder einem der vorangehenden Ansprüche, dadurch gekennzeichnet, daß die Außenumfangsfläche (11) der Klemm- und Spreiz-Segmente (9) mit einem griffigen Profil versehen ist.

13. Fahrzeugrad nach einem oder mehreren der vorangehenden Ansprüche, dadurch gekennzeichnet, daß die Innenfläche (12) der Klemm- und Spreiz-Segmente (9) über miteinander formschlüssige Vorsprünge und Vertiefungen mit dem Felgengrund koppelbar ist.

14. Fahrzeugrad nach einem der vorangehenden Ansprüche, dadurch gekennzeichnet, daß jedes Klemm- und Spreiz-Segment (9) gegen die Felge (5) mittels mindestens einer Sicherungsschraube (10) geklemmt ist, welche durch den Felgengrund hindurchtritt und in eine Gewindebohrung (13) des Klemm- und Spreiz-Segments (9) eingeschraubt ist.

15. Fahrzeugrad nach einem der vorangehenden Ansprüche, dadurch gekennzeichnet, daß eine Befestigungsschraube (10) gleichzeitig als Ventil zum Zuführen von Luft zu dem Reifen aufgebaut ist.

16. Fahrzeugrad nach einem oder mehreren der vorangehenden Ansprüche, dadurch gekennzeichnet, daß zwischen den Klemm- und Spreiz-Segmenten (9) und den Seitenflächen der Stützringe (7, 8) Seitenzentrierungs-Vorsprünge (15) vorgesehen sind, die mit diesen an einem der beiden Teile im radial äußeren Bereich zusammenwirken, wobei die Zentrierungsvorsprünge zum Eingriff in eine in dem anderen jeweiligen Teil ausgebildete Führungsnut (16) bestimmt sind.

17. Fahrzeugrad nach einem der vorangehenden Ansprüche, dadurch gekennzeichnet, daß die Stützringe (7, 8) an der den Klemm- und Spreiz-Segmenten (9) zugewendeten Seite im Bereich des Außenumfangs mit Segmenthalte-Vorsprüngen (17) versehen sind.

18. Fahrzeugrad nach einem oder mehreren der vorangehenden Ansprüche, dadurch gekennzeichnet, daß die Stützringe (7, 8) an der Reifenwandseite mit Versteifungsrippen (19) versehen sind, die im zusammengebauten Zustand mit der Innenwand des Reifens über den Reifenwulsten (4) in Berührung kommen.

## Revendications

1. Roue de véhicule comportant une jante en plusieurs parties (5) ayant des sièges de talon et des rebords de jante latéraux (6), un pneumatique sans chambre (1), en particulier du type radial, et également un système de roulage d'urgence qui est prévu sur la jante entre et en contact avec les talons de pneumatique (4), caractérisée en ce que système de roulage d'urgence est formé par deux anneaux de support séparés (7, 8) constitués au moins en partie de matière élastomère et de segments de serrage et d'écartement (9) qui s'engagent avec correspondance de forme entre ces anneaux de support (7, 8) et sont fixés au moyen d'éléments de fixation (10) contre la base de la jante et les rebords de jante (6) afin de procurer un ensemble de transmission de force avec correspondance de forme entre les anneaux de support (7, 8), les talons de pneumatique (4) et la jante (5).

2. Roue de véhicule selon la revendication 1, caractérisée en ce que l'inclinaison de la surface latérale des éléments de support annulaires en forme de disque (7, 8) faisant face aux segments de serrage et d'écartement (9) est sensiblement la même, au moins dans la zone entre la base de la jante et le niveau des rebords de jantes, que l'inclinaison de la surface extérieure des segments de serrage et d'écartement (9) qui se rétrécissent en direction de la base de la jante.

3. Roue de véhicule selon la revendication 1 ou la revendication 2, caractérisée en ce que la hauteur du système de roulage d'urgence par rapport à la base de la jante est approximativement deux fois la hauteur respective des rebords de jante.

4. Roue de véhicule selon la revendication 2, caractérisée en ce que l'inclinaison de la surface latérale des anneaux de support (7, 8) associés aux segments de serrage et d'écartement (9) par rapport au plan radial central est de 10 à 20 degrés, et en particulier approximativement de 15 degrés.

5. Roue de véhicule selon une des revendications précédentes, caractérisée en ce que les anneaux de support (7, 8) possèdent une couche d'étanchéité élastique souple sur les côtés de talon et/ou sur le côté de la base de jante.

6. Roue de véhicule selon la revendication 5, caractérisée en ce que la couche d'étanchéité sur le côté de la base de jante s'étend sous la forme d'une lèvre d'étanchéité (14) dans chaque cas jusqu'à l'anneau de support disposé à l'opposé; et en ce que les lèvres d'étanchéité (14) des deux anneaux de support (7, 8) se chevauchent l'une l'autre.

7. Roue de véhicule selon la revendication 5, caractérisée en ce qu'une bande d'étanchéité qui s'étend sur toute la largeur de la jante et s'engage sous les talons de pneumatique (4) est prévue pour l'étanchéité au niveau de la base de jante.

8. Roue de véhicule selon une des revendications précédentes, caractérisée en ce que des bandes d'étanchéité (21, 22) qui s'étendent sous les talons de pneumatique associés (4) sont formées sur les anneaux de support (7, 8) pour l'étanchéité au niveau de la base de jante.

9. Roue de véhicule selon une des revendications précédentes, caractérisée en ce que l'épaisseur axiale des anneaux de support (7, 8) qui sont de préférence pourvus de câbles et/ou de renforts en acier, et des segments de serrage et d'écartement (9) se montent respectivement à approximativement 1/3 de l'espacement mutuel des talons (4) situés sur les sièges de talon.

10. Roue de véhicule selon une ou plusieurs des revendications précédentes, caractérisée en ce que les segments de serrage et d'écartement (9), qui à l'état assemblé forment un anneau composite, ont de préférence un diamètre extérieur plus petit que les anneaux de support (7, 8).

11. Roue de véhicule selon l'une quelconque des revendications précédentes, caractérisée en ce que chaque segment de serrage et d'écartement (9) a la forme d'un coin tronqué; et en ce que la surface interne (12) associée à l'extrémité tronquée est directement serrée à l'état assemblé contre la base de la jante.

12. Roue de véhicule selon l'une quelconque ou une des revendications précédentes, caractérisée en ce que la surface périphérique extérieure (11) des segments de serrage et d'écartement (9) est pourvue d'un profil d'accrochage.

13. Roue de véhicule selon l'une quelconque ou plusieurs des revendications précédentes, caractérisée en ce que la surface intérieure (12) des segments de serrage et d'écartement (9) peut être reliée à la base de la jante au moyen de saillies et de renfoncements interengagés.

14. Roue de véhicule selon une des revendications précédentes, caractérisée en ce que chaque segment de serrage et d'écartement (9) est serré contre la jante (5) au moyen d'au moins une vis de fixation (10) qui passe à travers la base de la jante 'et engage un alésage taraudé (13) du segment de serrage et d'écartement (9).

15. Roue de véhicule selon une des revendications précédentes, caractérisée en ce qu'une vis de fixation (10) est simultanément construite et utilisée comme valve pour l'alimentation en air du pneumatique.

16. Roue de véhicule selon une ou plusieurs des revendications précédentes, caractérisée en ce que des saillies de centrage latérales (15) sont prévues entre les segments de serrage et d'écartement (9) et les surfaces latérales des anneaux de support (7, 8) qui coopèrent avec ceux-ci sur une des deux parties dans la zone radialement à l'extérieur, avec les saillies de centrage prévues pour s'engager dans une rainure de guidage (16) formée dans la l'autre partie respective.

17. Roue de véhicule selon l'une quelconque des revendications précédentes, caractérisée en ce que les anneaux de support (7, 8) sont pourvus de saillies de retenue de segments (17) sur le côté faisant face aux segments de serrage et d'écartement (9) dans la zone de la périphérie extérieure.

18. Roue de véhicule selon une ou plusieurs des revendications précédentes, caractérisée en ce que les anneaux de support (7, 8) sont pourvus de nervures de rigidification (19) au niveau du flanc de pneumatique qui viennent en contact avec la paroi interne du pneumatique au-dessus des talons de pneumatique (4).

*Fig.1.*

*Fig.2.*

Fig.3.

Fig.4.

*Fig.5.*

*Fig.6.*